# DEMANDE DE BREVET EUROPEEN

(11) **EP 1 217 810 A1**
(43) Date de publication de la demande: **26.06.2002**
(21) Numéro de dépôt: 01204046.5
(22) Date de dépôt: 24.10.2001
(51) Int. Cl.: H04M 1/247, H04M 1/02

(54) **Appareil comprenant un écran de visualisation sur un côté du boîtier et une commande d'affichage sur le côté opposé**

(30) Priorité: 31.10.2000 FR 0013986
(71) Demandeur: Koninklijke Philips Electronics N.V., 5621 BA Eindhoven (NL)
(72) Inventeur: Ringot, Nicolas, 75008 Paris (FR)
(74) Mandataire: Chaffraix, Jean

(57) **Abrégé**

Cet appareil comprend un boîtier (1) sur lequel sont disposés un écran d'affichage (3) pour afficher des rubriques d'un menu et/ou des informations et des commandes (10) pour modifier l'affichage.

L'invention propose de prévoir au moins une commande d'affichage (20) placée sur le côté du boîtier opposé à l'écran (3). Ainsi, il est possible d'économiser de la place sur la face avant en vue de ménager l'espace le plus grand possible pour l'écran (3).
Radio téléphonie mobile.

## Description

L'invention concerne un appareil comprenant un boîtier sur lequel est disposé un écran d'affichage pour afficher des rubriques d'un menu et/ou des informations et des commandes pour modifier l'affichage.

L'invention trouve d'importantes applications lorsqu'il faut visualiser de nombreuses informations sur un écran de petites dimensions, donc monté sur un appareil ayant lui aussi de petites dimensions. C'est le cas notamment, lorsque l'appareil est un radiotéléphone mobile dont on veut diminuer le plus possible l'encombrement, alors qu'il est souhaité d'avoir un écran de plus en plus grand.

Un appareil de ce genre, comportant un écran et une multitude de commandes est connu du brevet des Etats-Unis d'Amérique n° 5 774 540. Ce brevet n'apporte aucune solution pour obtenir à la fois un grand écran et un petit boîtier.

La présente invention propose un appareil du genre mentionné dans le préambule, qui permet d'économiser de la place sur le boîtier et donc de ménager un espace assez grand pour l'écran sans qu'il soit trop encombrant.
Pour cela, un tel appareil est remarquable en ce que qu'il comporte, au moins, une commande d'affichage placée sur le côté du boîtier opposé à l'écran.

La description suivante, faite en regard des dessins ci-annexés, le tout donné à titre d'exemples non limitatifs fera bien comprendre comment l'invention peut être réalisée. Sur les dessins :
La figure 1 montre une vue de face de l'appareil conforme à l'invention,
La figure 2 montre une vue arrière de l'appareil conforme à l'invention,
La figure 3 montre une vue de profil de l'appareil conforme à l'invention,
La figure 4 montre la constitution de la commande préconisée par l'invention,
La figure 5 montre un exemple d'image visualisée par un appareil conforme à l'invention,
La figure 6 montre comment s'organise la navigation sur un appareil conforme à l'invention.

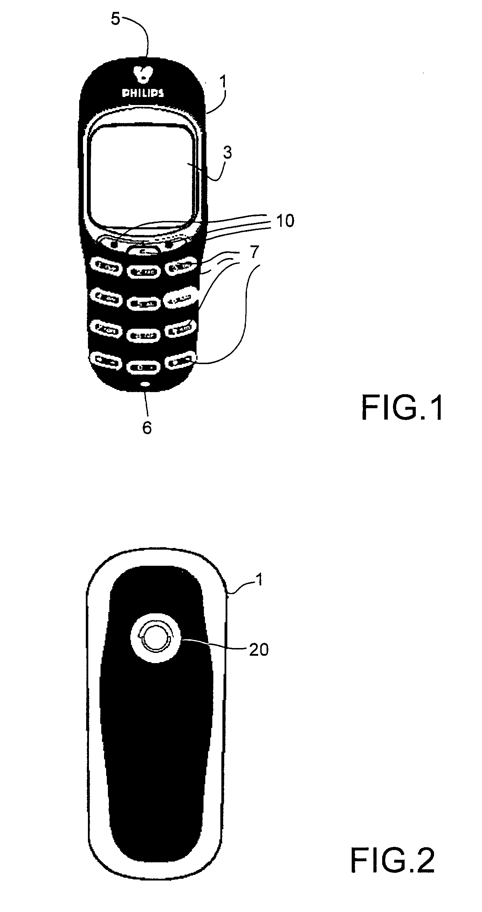

Sur la figure 1, on a représenté un appareil de téléphonie mobile formé d'un boîtier 1 comportant, notamment, un écran 3, un écouteur 5, un microphone 6, un clavier 7 et un ensemble de boutons de manoeuvre 10.

Conformément à l'invention, on a prévu une commande située au dos de l'appareil, sur le côté du boîtier opposé à l'écran. La figure 2 montre la vue arrière du boîtier sur laquelle la commande 20 est montrée. Ainsi par la manoeuvre de cette commande, il est possible de naviguer parmi les rubriques affichées sur l'écran 3.

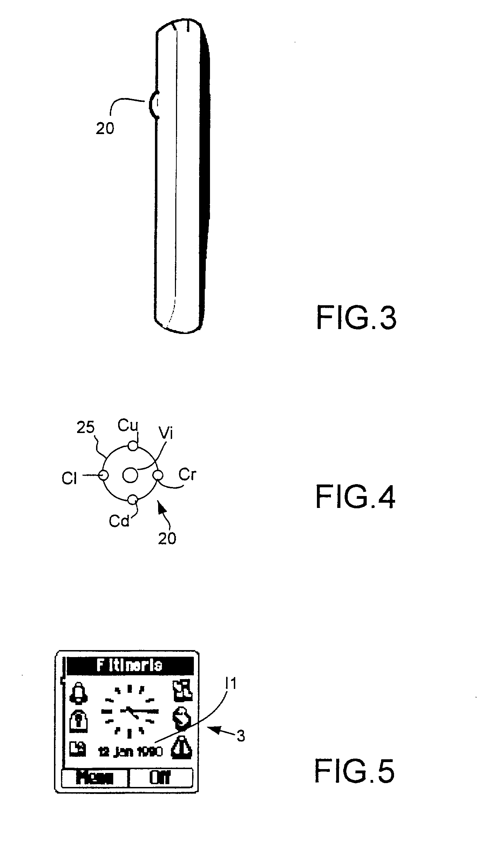

Cette commande 20 forme une protubérance sur le dos de l'appareil comme le montre la figure 3. Ainsi, l'utilisateur n'a aucune peine à manoeuvrer cette commande 20 puisqu'il sent sous les doigts cette protubérance qui guide ses mouvements.

Cette commande 20 est constituée à partir de cinq contacts dont quatre : « Cu », « Cd », « Cl » et « Cr » sont situés sur le pourtour d'une couronne 25, et d'un cinquième « Vi » situé au centre de cette couronne 25, comme cela est montré sur la figure 4.

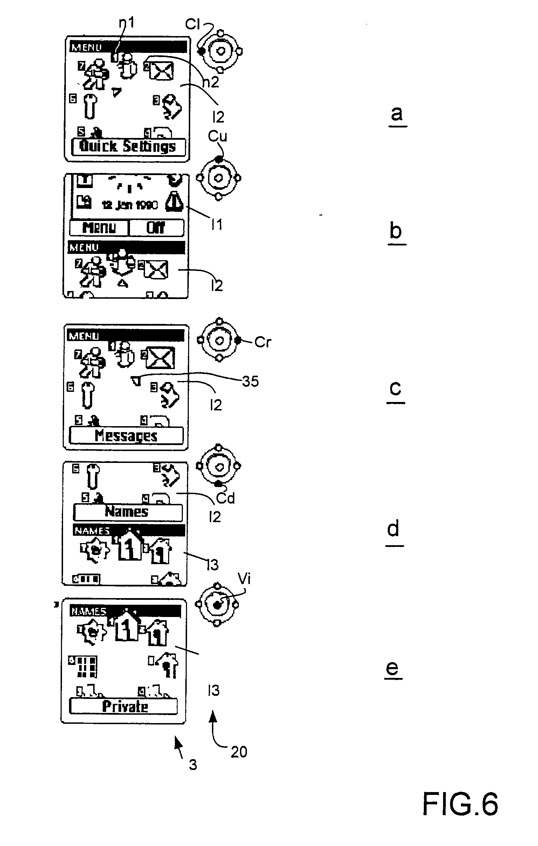

Avec cette commande 20 on peut exécuter une navigation dans un ensemble d'informations à visualiser. On part d'une image « I1 » montrée sur l'écran 3 à la figure 5. Cette navigation est explicitée à l'aide de la figure 6.

A partir de l'image I1, montrée à la figure 5, par un appui sur la commande 20 en agissant sur le contact « Cl », on fait apparaître, par déroulement (scrolling selon le vocabulaire anglo-saxon) une image I2, concernant l'écran précédent déjà accédé ; ceci est montré en a sur la figure 6. Cet écran est par exemple du type décrit dans le document de brevet EP 0 944 218 déposé au nom de la demanderesse le 16/03/1999. Ce document propose un écran sur lequel des icônes sont disposées sur un cercle. Par l'appui d'une touche, on fait subir à ces icônes une rotation.

En agissant sur le contact « Cu », on provoque un déroulement avec l'écran précédent c'est-à-dire l'image « I1 ». Si on agit sur le contact « Cr » on accède à la prochaine option, ce qui est indiqué par la flèche 35. Une action sur le contact « Cd » provoque un autre déroulement d'écran. Si on agit sur le contact « Vi », on valide l'option sélectionnée. Par exemple la flèche 35 pointant sur un item d'un menu, représenté par une icône, indique l'option susceptible d'être validée.

Il est possible de combiner cette navigation que l'on peut qualifier d'analogique au moyen de la commande 20 avec une navigation directe obtenue au moyen des touches du clavier 7. Ainsi si on se rapporte à la figure 6, on voit sur l'image 12 que différents chiffres n1, n2,... sont mis en regard des icônes visualisées.

Selon la navigation analogique, on peut valider la fonction que suggère l'icône lorsqu'elle est mise en vis-à-vis de la flèche 35, par rotation du carrousel d'icônes montré sur l'image I2. Pour obtenir cela, on agit de la manière indiquée dans le texte de brevet européen, ci-dessus mentionné. Une fois l'icône mise en vis-à-vis de ladite flèche, on appuie sur le contact « Vi ».

Selon la navigation directe, différents numéros (ou autres références) « n1 », « n2 »,... etc sont affectés aux items du menu visualisé sur l'écran 3. On appuie sur une touche du clavier affectée du numéro correspondant à l'item choisi. Les informations concernant l'icône ou l'item ainsi référencé apparaissent, sans déroulement sur l'écran 3. L'appui de la touche référencée du clavier 7 peut être validé par l'appui d'une autre touche « Tv » faisant partie de l'ensemble de touches 10 (voir figure 1).

Ainsi, on se rend compte que l'invention apporte de nombreux avantages :
- L'avantage principal, comme il l'a été dit, est que l'encombrement est réduit sans sacrifier pour cela les dimensions de l'écran.
- Un second avantage est que l'on a un mode de navigation mixte qui permet, dans le mode direct, une navigation rapide.
- Ce mode de navigation mixte permet de s'adapter aux mentalités des utilisateurs.
- En outre l'invention peut être mise à profit pour la navigation « Internet » ou plus précisément « WAP ».

## Revendications

1. Appareil comprenant un boîtier sur lequel est disposé un écran d'affichage pour afficher des rubriques d'un menu et/ou des informations et des commandes pour modifier l'affichage, **caractérisé en ce que** il comporte, au moins, une commande d'affichage placée sur le coté du boîtier opposé à l'écran.

2. Appareil selon la revendication 1, **caractérisé en ce que** cette commande permet de faire dérouler différents items sur ledit écran.

3. Appareil selon la revendication 1 ou 2, comportant un clavier, **caractérisé en ce qu'**il offre deux sortes de navigation une, dite analogique obtenue au moyen de ladite commande d'affichage et une, dite directe obtenue par un appui sur des touches du clavier correspondant à un repère porté sur les items du menu visualisé.
